# EUROPÄISCHE PATENTSCHRIFT

(11) **EP 2 704 276 B1**
(45) Veröffentlichungstag und Bekanntmachung des Hinweises auf die Patenterteilung: **06.05.2015**
(21) Anmeldenummer: 13004184.1
(22) Anmeldetag: 24.08.2013
(51) Int. Cl.: H02G 1/10, F03D 11/04, E02F 5/10

(54) **Verfahren zur Verlegung eines Kabels im Offshore-Bereich von einer Windenergieanlage zu einem Zielort und Windenergieanlage zur Anordnung im Offshore-Bereich**
Method for laying a cable in the offshore area from a wind energy plant to a destination and wind energy plant to be sited in the offshore area
Procédé de pose d'un câble dans la zone en mer d'une installation éolienne pour un site et installation éolienne destinée à être agencée dans la zone en mer

(30) Priorität: 01.09.2012 DE 102012017379
(43) Veröffentlichungstag der Anmeldung: 05.03.2014
(73) Patentinhaber: STRABAG Offshore Wind GmbH, 70567 Stuttgart (DE)
(72) Erfinder: Weber, Klaus, Dr., 72366 Balingen (DE)
(74) Vertreter: Reinhardt, Annette

(56) Entgegenhaltungen:
- WO-A1-00/14838
- WO-A1-00/39903
- WO-A1-99/54556
- GB-A- 2 423 778
- US-A- 5 971 665

## Beschreibung

Die Erfindung betrifft ein Verfahren zur Verlegung eines Kabels im Offshore-Bereich von einer Windenergieanlage zu einem Zielort und eine Windenergieanlage zur Anordnung im Offshore-Bereich.

Aus der DE 201 00 588 U1 ist eine Offshore-Windkraftanlage bekannt, die im Trockendock gebaut und montiert und anschließend im Ganzen zu ihrer Seeposition verschleppt wird. Das Seekabel zur Verbindung der Windenergieanlage mit einem Leitungskabelsammelpunkt ist an der Windenergieanlage vorinstalliert und kann nach Installation der Windenergieanlage vor Ort von einem Transportschiff zu dem Leitungskabelsammelpunkt verlegt werden.

**Die** US 5,971,665 **zeigt ein Verfahren zur Verlegung eines Kabels mit einem Unterwasserfahrzeug im Offshore-Bereich von einer Produktionsplattform zu einem Zielort. Das zu verlegende Kabel ist auf einer Kabeltrommel aufgewickelt. Die Kabeltrommel wird vom Schiff aus zum Meeresgrund herabgelassen.**

**Die** GB 2 423 778 A **zeigt einen Unterwasserpflug, welcher ein Kabel zwischen zwei Windenergieanlagen in den Meeresgrund eingräbt.**

Der Erfindung liegt die Aufgabe zugrunde, ein Verfahren zur Verlegung eines Kabels im Offshore-Bereich von einer Windenergieanlage zu einem Zielort bereitzustellen, mit dem die Kabelverlegung einfach möglich ist. Eine weitere Aufgabe der Erfindung besteht darin, eine Windenergieanlage zur Anordnung im Offshore-Bereich anzugeben, die auf einfache Weise die Verbindung mit einem Zielort über ein Kabel zulässt.

Diese Aufgabe wird bezüglich des Verfahrens durch ein Verfahren mit den Merkmalen des Anspruchs 1 und bezüglich der Windenergieanlage durch eine Windenergieanlage mit den Merkmalen des Anspruchs 15 gelöst.

Die Kabelverlegung mittels eines Unterwasserfahrzeugs erlaubt auf einfache Weise ein sicheres Verlegen des Kabels im Meeresboden. Dadurch, dass das Kabel bereits an der Windenergieanlage angeordnet und insbesondere an dieser vorinstalliert ist, entfallen aufwendige Anschlussarbeiten des Kabels an der Windenergieanlage am Bestimmungsort der Windenergieanlage. Das Kabel kann an Land vorinstalliert und zusammen mit der Windenergieanlage in den Offshore-Bereich gebracht werden. Durch die Verlegung mittels eines Unterwasserfahrzeugs ist die Position des Kabels am Meeresboden genau bekannt, so dass beispielsweise Beschädigungen durch ankernde Schiffe oder Schleppnetze vermieden werden können. Die Verlegung durch ein Unterwasserfahrzeug wird außerdem weniger stark durch ungünstige Wetterverhältnisse beeinflusst als beispielsweise die Verlegung durch ein Schiff. Der Zielort, zu dem das Kabel verlegt wird, kann beispielsweise eine weitere Windenergieanlage oder ein Leitungskabelsammelpunkt sein.

Vorteilhaft wird vor dem Aufnehmen der Aufbewahrvorrichtung an der Windenergieanlage ein Kolkschutz an der Windenergieanlage eingebracht. Das Unterwasserfahrzeug wird insbesondere nach dem Einbringen des Kolkschutzes rückwärts an die Aufbewahrvorrichtung herangefahren. Anschließend wird die Aufbewahrvorrichtung von dem Unterwasserfahrzeug aufgenommen. Dadurch, dass der Kolkschutz vor dem Aufnehmen der Aufbewahrvorrichtung eingebracht wird, kann das Kabel auf dem Kolkschutz verlegt werden. Vorteilhaft ist die Aufbewahrvorrichtung eine Kabeltrommel, auf der das Kabel aufgerollt ist.

Es ist vorgesehen, dass die Achse der Kabeltrommel mit einem Schwenkarm des Unterwasserfahrzeugs aufgenommen wird. Der Schwenkarm ist bei der Aufnahme der Kabeltrommel vorteilhaft in einem der Rückseite des Unterwasserfahrzeugs zugewandten Bereich angeordnet und schwenkt zum Aufnehmen der Kabeltrommel von der Windenergieanlage weg, also in Fahrtrichtung nach vorne. Über den Schwenkarm kann die Kabeltrommel aus einer Halterung oder dgl. aufgenommen werden. Der Schwenkarm ist dabei insbesondere um eine Schwenkachse schwenkbar gelagert, die quer zur Fahrtrichtung des Unterwasserfahrzeugs bei Geradeausfahrt steht. Der Schwenkarm besitzt dabei vorteilhaft eine Aufnahme für die Achse der Kabeltrommel. Zum Aufnehmen der Kabeltrommel ist die Aufnahme vorteilhaft in Fahrtrichtung hinter der Schwenkachse angeordnet und bei der Fahrt von der Windenergieanlage zum Zielort in Fahrtrichtung vor der Schwenkachse. Dadurch ergibt sich ein einfacher konstruktiver Aufbau. Es kann vorgesehen sein, die Kabeltrommel in der Aufnahme gegen Auftriebskräfte zu sichern. Ein einfacher Aufbau ergibt sich, wenn die Kabeltrommel an dem Schwenkarm frei drehbar ist und das Kabel im Wesentlichen aufgrund seines Eigengewichts von der Kabeltrommel abgerollt wird. Ein zusätzlicher Antrieb zum Drehen der Kabeltrommel kann dadurch entfallen.

Vorteilhaft wird das Kabel im Bereich des Kolkschutzes mit einem an dem Kabel vormontierten Kabelschutz auf dem Kolkschutz verlegt. Auch am Zielort ist vorteilhaft ein Kolkschutz vorgesehen. Der Kabelschutz erstreckt sich dabei vorteilhaft über den gesamten oberhalb des Meeresbodens verlegten Abschnitt des Kabels. Das der Windenergieanlage abgewandte Ende des Kabelschutzes wird vorteilhaft ebenso wie das Kabel im Bereich zwischen dem Kabelschutz an der Windenergieanlage und dem Kabelschutz am Zielort, also der Abschnitt des Kabels, der in dem zwischen den Baugruben der Windenergieanlage und dem Zielort angeordneten Bereich verlegt ist, in den Meeresboden eingespült oder eingepflügt. Der Zielort kann eine weitere Windenergieanlage oder ein Leitungskabelsammelpunkt sein. Auch das dem Zielort abgewandte Ende des am Zielort vorgesehenen Kabelschutzes wird in den Meeresboden eingespült oder eingepflügt. Durch das Einspülen oder Einpflügen in den Meeresboden wird das Kabel vor Beschädigungen durch Anker oder durch Schleppnetze geschützt.

Vorteilhaft besitzt das Unterwasserfahrzeug eine Verlegeeinrichtung, wobei die Verlegeeinrichtung in ihre Betriebsposition und das Kabel in den Aufnahmebereich der Verlegeeinrichtung bewegt werden, wenn das Unterwasserfahrzeug den Bereich des Kolkschutzes der Windenergieanlage verlassen hat. Vorteilhaft wird das Kabel aus dem Aufnahmebereich der Verlegeeinrichtung und der Kabelpflug in seine Außerbetriebsposition bewegt, bevor das Unterwasserfahrzeug den Bereich eines Kolkschutzes am Zielort erreicht. Eine Beschädigung des Kolkschutzes, der vorteilhaft aus Aushub besteht, der in textile Container verfüllt wurde, kann dadurch vermieden werden.

Zum Anschluss des Kabels am Zielort, insbesondere an eine zweite Windenergieanlage oder an einen Leitungskabelsammelpunkt, ist vorteilhaft vorgesehen, dass das Kabel am Zielort vollständig von der Aufbewahrvorrichtung abgenommen wird. Das Entnehmen von der Aufbewahrvorrichtung erfolgt dabei vorteilhaft mittels eines Auftriebskörpers. Dadurch kann ein Abknicken des Kabels auf einfache Weise vermieden werden. Das Kabelende des Kabels wird nach dem vollständigen Abnehmen von der Aufbewahrvorrichtung, insbesondere dem vollständigen Abrollen von der Kabeltrommel, vorteilhaft in den Kabelkanal am Zielort eingeführt. Das Kabel wird dabei insbesondere unter Zurückholen des Auftriebskörpers in den Kabelkanal eingebracht. Vorteilhaft ist in dem Kabelkanal ein Seil angeordnet, an dem das Kabelende festgelegt wird, wobei das Kabel mittels des Seils in dem Kabelkanal eingezogen wird.

Um das Einfädeln des Kabelendes in den Kabelkanal zu erleichtern, ist vorteilhaft vorgesehen, dass das Unterwasserfahrzeug eine Führung für das Kabel besitzt. Die Führung ist dabei vorteilhaft nach oben offen, so dass das von dem Auftriebskörper vollständig abgewickelte Kabel leicht in die Führung eingeführt werden kann. Das Unterwasserfahrzeug wird vorteilhaft so an den Zielort gefahren, dass eine Austrittsöffnung aus der Führung des Unterwasserfahrzeugs an einer Eintrittsöffnung des Kabelkanals der zweiten Windenergieanlage zu liegen kommt. Das Kabel gelangt dadurch beim Verlassen der Führung des Unterwasserfahrzeugs an die Eintrittsöffnung des Kabelkanals und muss dort lediglich mit den Seilen im Kabelkanal verbunden werden. Anschließend kann das Kabel durch Nachobenziehen des Seils, beispielsweise über eine Winde oder dgl., in den Kabelkanal eingezogen werden.

Für eine Windenergieanlage zur Anordnung im Offshore-Bereich ist vorgesehen, dass die Windenergieanlage eine abnehmbare Aufbewahrvorrichtung für ein Kabel zur Verbindung mit einem Zielort besitzt. In der Aufbewahrvorrichtung ist dabei ein an die Windenergieanlage angeschlossenes Kabel zur Verbindung mit dem Zielort wie einer weiteren Windenergieanlage oder einem Leitungskabelsammelpunkt angeordnet. Durch Abnehmen der Aufbewahrvorrichtung und Transportieren der Aufbewahrvorrichtung zum Zielort unter konstantem Entnehmen des Kabels aus der Aufbewahrvorrichtung und Verlegen des Kabels in den Meeresboden, kann das Kabel auf einfache Weise verlegt werden. Aufwendige Anschlussarbeiten an der Windenergieanlage können beim Bau der Windenergieanlage an Land erfolgen und sind damit von Wetterverhältnissen und Seegang unabhängig.

Die Länge des Kabels ist vorteilhaft auf den Abstand der Windenergieanlage zum Zielort und die Höhe der jeweiligen Anschlussstellen abgestimmt. Es ist vorgesehen, dass an dem in der Aufbewahrvorrichtung angeordneten Kabel ein Kabelschutz vormontiert ist. Der Kabelschutz ist dabei an den Abschnitten des Kabels, die im Bereich eines Kolkschutzes der Windenergieanlage und des Zielorts zu verlegen sind, angeordnet. Die Aufbewahrvorrichtung ist insbesondere eine Kabeltrommel, und die Windenergieanlage besitzt eine Halterung für die Kabeltrommel.

Ausführungsbeispiele der Erfindung werden im Folgenden anhand der Zeichnung erläutert. Es zeigen:
- Fig. 1: eine schematische Darstellung von zwei Windenergieanlagen im Offshore-Bereich,
- Fig. 2: eine ausschnittsweise Schnittdarstellung durch die erste Windenergieanlage benachbart zum Meeresboden,
- Fig. 3: die Darstellung aus Fig. 2 beim Einbringen des Kolkschutzes,
- Fig. 4: die Darstellung aus Fig. 2 beim Heranfahren des Unterwasserfahrzeugs,
- Fig. 5 bis 7: Ausschnitte der Darstellung aus Fig. 2 beim Aufnehmen der Kabeltrommel,
- Fig. 8 bis 10: die Darstellung aus Fig. 2 beim Ausfahren des Unterwasserfahrzeugs aus der Baugrube,
- Fig. 11: eine Seitenansicht des Unterwasserfahrzeugs auf dem Meeresboden beim Verlegen des Kabels,
- Fig. 12: eine ausschnittsweise Schnittdarstellung der zweiten Windenergieanlage benachbart zum Fundament und zum Unterwasserfahrzeug,
- Fig. 13 bis 16: ausschnittsweise Schnittdarstellungen der Darstellung aus Fig. 12 beim Einfahren des Unterwasserfahrzeugs in die Baugrube und beim Abwickeln des Kabels, wobei in Fig. 15 das Unterwasserfahrzeug geschnitten gezeigt ist,
- Fig. 17: die Darstellung aus Fig. 12 beim Einführen des Kabels in die Führung des Unterwasserfahrzeugs,
- Fig. 18: die Darstellung aus Fig. 12 beim Einführen des Kabels in den Kabelkanal der Windenergieanlage,
- Fig. 19 bis 21: ausschnittsweise Schnittdarstellungen des Unterwasserfahrzeugs und der zweiten Windenergieanlage beim Einziehen des Kabels in den Kabelkanal der zweiten Windenergieanlage,
- Fig. 22: eine ausschnittsweise Schnittdarstellung der Windenergieanlage nach dem Abnehmen des Kabels vom Unterwasserfahrzeug und
- Fig. 23: die zweite Windenergieanlage in ausschnittsweiser Schnittdarstellung nach der Verlegung des Kabels,
- Fig. 24: eine ausschnittsweise Schnittdarstellung eines Leitungskabelsammelpunkts beim Einführen des Kabels in den Kabelkanal des Leitungskabelsammelpunkts.

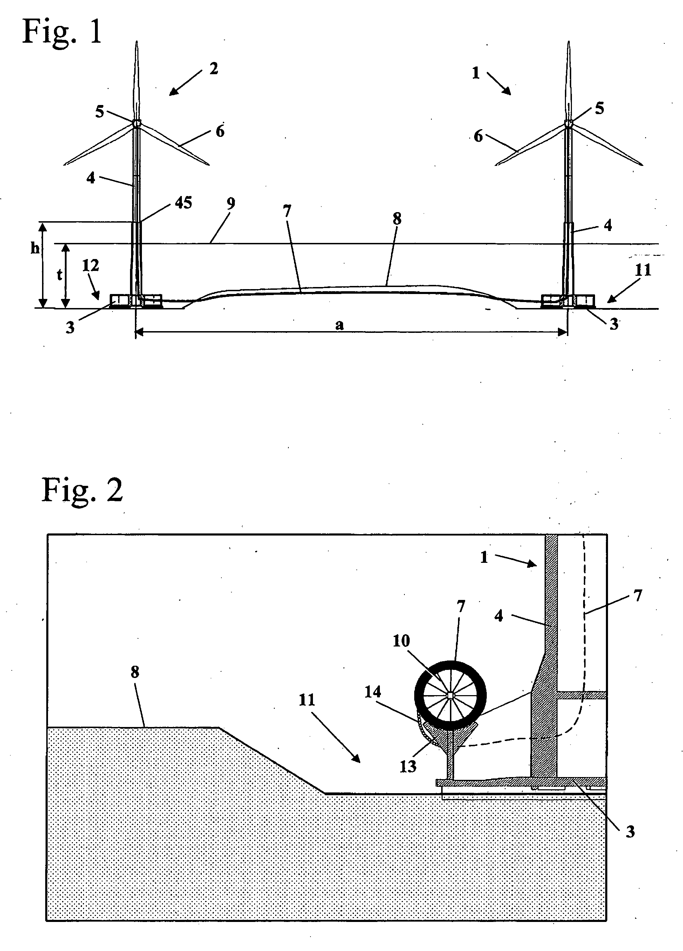

Fig. 1 zeigt schematisch eine erste Windenergieanlage 1 und eine zweite Windenergieanlage 2, die im Offshore-Bereich angeordnet sind. Die erste Windenergieanlage 1 ist in einer ersten Baugrube 11 auf dem Meeresboden 8 angeordnet und die zweite Windenergieanlage 2 in einer zweiten Baugrube 12 am Meeresboden 8. Die beiden Windenergieanlagen 1, 2 besitzen jeweils ein Fundament 3, das beispielsweise als Flachgründung ausgeführt ist und mit dem sie auf dem Meeresboden angeordnet sind. Auf dem Fundament 3 ist jeweils ein Mast 4 angeordnet, der ein Maschinengehäuse 5 und einen drehbar gelagerten Rotor 6 trägt. Die Masten 4 besitzen jeweils eine Plattform 45, die in einer Höhe h angeordnet sind. Die Höhe h entspricht dem Abstand der Plattformen 45 zum Meeresboden 8. Die beiden Plattformen 45 der Windenergieanlagen 1 und 2 sind über ein Kabel 7 miteinander verbunden, das im Bereich zwischen den Windenergieanlagen 1 und 2 am Meeresboden 8 verlegt ist. Wie Fig. 1 zeigt, besitzen die beiden Windenergieanlage 1 und 2 einen Abstand a zueinander. Der Abstand a ist dabei zwischen den Längsmittelachsen der Masten 4 gemessen. Zur elektrischen Verbindung der beiden Windenergieanlagen 1, 2 miteinander werden üblicherweise auf der Höhe der Plattformen 45 angeordnete Schaltschränke über das Kabel 7 miteinander verbunden. Die Schaltschränke werden jeweils über ein innerhalb des Masts 4 zum Maschinengehäuse 5 geführtes weiteres Kabel angeschlossen. Die benötigte Kabellänge für das Kabel 7 entspricht näherungsweise der doppelten Höhe h zuzüglich des Abstands a.

In Fig. 1 ist auch die Wasseroberfläche 9 eingezeichnet. Die Wassertiefe t, also der Abstand der Wasseroberfläche 9 zum Meeresboden 8 kann beispielsweise im Bereich von 20 m bis 60 m liegen.

Fig. 2 zeigt den Bereich der Baugrube 11 der ersten Windenergieanlage 1. Das durch den Mast 4 geführte Kabel 7 ist schematisch gezeigt. Dabei kann das Kabel 7 beispielsweise vom Maschinengehäuse 5 der ersten Windenergieanlage 1 durch den Mast 4 geführt und auf der Kabeltrommel 10 aufgerollt sein. Es kann jedoch auch vorgesehen sein, dass ein durch den Mast 4 geführter Abschnitt des Kabels 7 an einen auf der Kabeltrommel 10 aufgerollten Abschnitt des Kabels 7 angeschlossen ist. Die Kabeltrommel 10 ist auf einer Halterung 13 gehalten. Falls erforderlich, ist die Kabeltrommel 10 an der Halterung 13 auftriebssicher gehalten. Die Halterung 13 ist am Fundament 3 festgelegt. Die Kabeltrommel 10 ist in einer solchen Höhe an der ersten Windenergieanlage 1 gehalten, dass sie die Kolkschutzarbeiten nicht behindert und - ggf. nach Einbringen eines Kolkschutzes - von einem Unterwasserfahrzeug aufgenommen werden kann. Das Kabel 7 wird an einer Produktionsstätte an der ersten Windenergieanlage 1 montiert. Auch die Kabeltrommel 10 wird an der ersten Windenergieanlage 1 angeordnet, bevor die erste Windenergieanlage 1 in den Offshore-Bereich verbracht wird. Wie Fig. 2 auch zeigt, besitzt das Kabel 7 in dem außerhalb der ersten Windenergieanlage 1 angeordneten Bereich einen Kabelschutz 14.

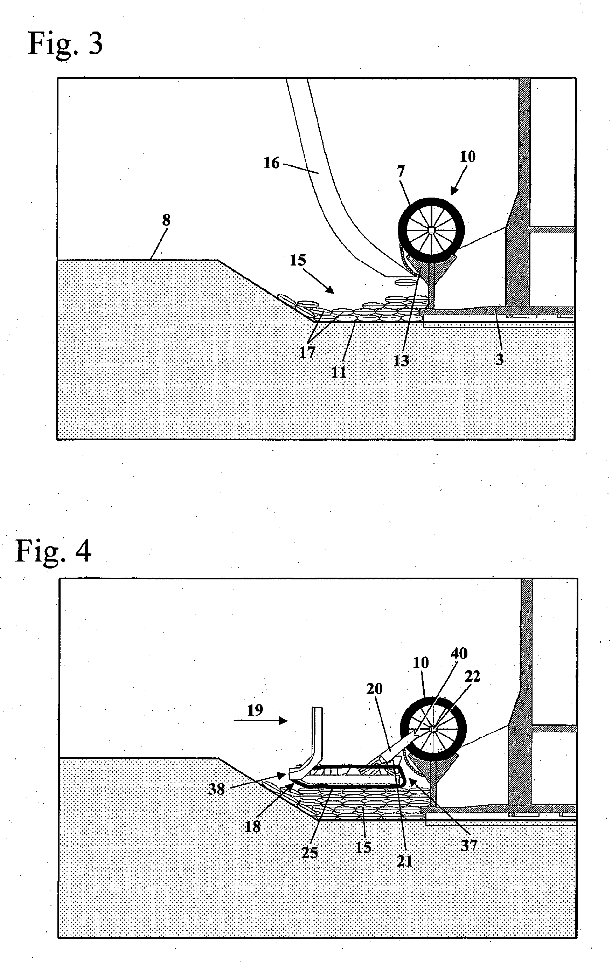

Nach der Anordnung der ersten Windenergieanlage 1 in der ersten Baugrube 11 wird, wie Fig. 3 zeigt, ein Kolkschutz 15 benachbart zum Fundament 3 in der Baugrube 11 angeordnet. Der Kolkschutz 15 wird vorteilhaft durch textile Container gebildet, die mit Aushub aus der Baugrube 11 gefüllt sind. Die Container 17 werden über ein Rohr 16 in die Baugrube 11 transportiert.

Zur Verlegung des Kabels 7 dient ein in Fig. 4 gezeigtes Unterwasserfahrzeug 18. Das Unterwasserfahrzeug 18 ist vorteilhaft ein ferngesteuertes Fahrzeug, ein sogenanntes "Remotely Operated Vehicle" (ROV). Das Unterwasserfahrzeug 18 wird von einem Schiff ferngesteuert. Das Unterwasserfahrzeug 18 ist ein Kettenfahrzeug mit einer in Fig. 4 schematisch gezeigten Kette 25. Die Kette 25 besteht vorteilhaft aus gelenkig miteinander verbundenen Kunststoff- oder Metallplatten. Das Unterwasserfahrzeug 18 besitzt einen Schwenkarm 20, an dessen freiem Ende eine Aufnahme 40 für eine Achse 22 der Kabeltrommel 10 gebildet ist. Das Unterwasserfahrzeug 18 besitzt eine Vorderseite 38 sowie eine Rückseite 37. Die Vorderseite 38 ist bei Vorwärtsfahrt nach vorne gerichtet und die Rückseite 37 nach hinten. Nach dem Einbringen des Kolkschutzes 15 fährt das Unterwasserfahrzeug 18 rückwärts in Richtung des in Fig. 4 gezeigten Pfeils 19 langsam an die Kabeltrommel 10 heran. Die Aufnahme 40 ist benachbart zur Rückseite 37 angeordnet, wobei der Schwenkarm 20 im Ausführungsbeispiel über die Rückseite 37 des Unterwasserfahrzeugs 18 hinausragt.

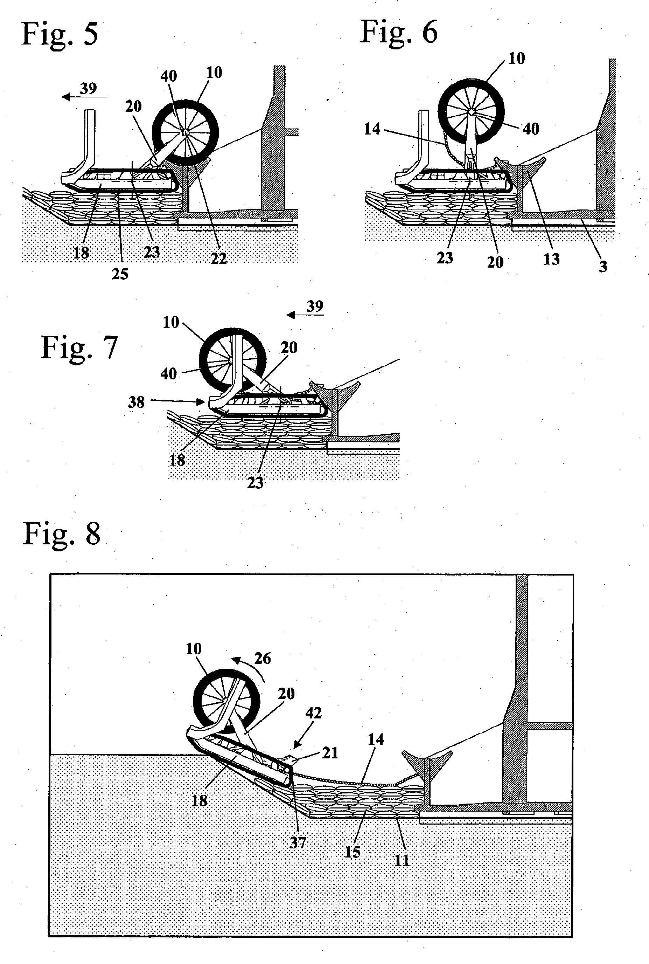

Fig. 5 zeigt das Unterwasserfahrzeug 18 beim Aufnehmen der Kabeltrommel 10. Dabei wird die Achse 22 der Kabeltrommel 10 in der Aufnahme 40 angeordnet. Der Schwenkarm 20 ist um eine Schwenkachse 23 schwenkbar gelagert, die quer, insbesondere senkrecht zu einer Fahrtrichtung 39 des Unterwasserfahrzeugs 18 ausgerichtet ist. Die Fahrtrichtung 39 ist dabei die Fahrtrichtung vorwärts geradeaus.

Nach dem Aufnehmen der Kabeltrommel 10 schwenkt der Schwenkarm 20, wie die Figuren 6 und 7 zeigen, nach vorne, bis die Kabeltrommel 10 benachbart zur Vorderseite 38 des Unterwasserfahrzeugs 18 angeordnet ist. Die Aufnahme 40 ist dann in Fahrtrichtung 39 vor der Schwenkachse 23 angeordnet. Die Achse 22 ist in der Aufnahme 40 frei drehbar gelagert.

Nach dem Vorschwenken des Schwenkarms 20 fährt das Unterwasserfahrzeug 18 aus der Baugrube 11 heraus, wie Fig. 8 zeigt. Dabei wird das Kabel 7 aufgrund der Schwerkraft auf dem Kolkschutz 15 verlegt. Die Kabeltrommel 10 dreht sich dabei in Richtung des Pfeils 26 in Fig. 8. Wie Fig. 8 auch zeigt, besitzt das Kabel 7 in dem auf dem Kolkschutz 15 verlegten Abschnitt den Kabelschutz 14. Benachbart zu seiner Rückseite 37 besitzt das Unterwasserfahrzeug 18 eine Verlegeeinrichtung 21, die bei der Fahrt auf dem Kolkschutz 15 in einer Außerbetriebsposition 42 angeordnet ist. Die Verlegeeinrichtung 21 kann beispielsweise ein Kabelpflug, ein Spülschwert oder ein Spülschlitten sein.

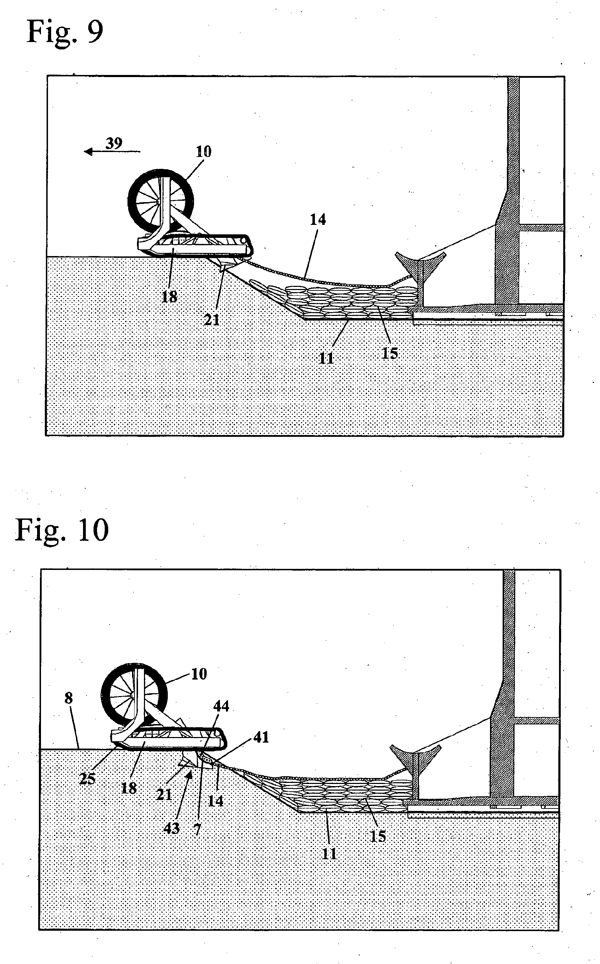

Sobald das Unterwasserfahrzeug 18 die Baugrube 11 verlassen hat und kein Kolkschutz 15 mehr im Schwenkbereich der Verlegeeinrichtung 21 angeordnet ist, schwenkt die Verlegeeinrichtung 21 über die in Fig. 9 gezeigte Zwischenstellung in ihre in Fig. 10 gezeigte Betriebsposition 43. Nachdem die Verlegeeinrichtung 21 nach unten geschwenkt ist, wird das Kabel 7 mit dem Kabelschutz 14 in den Aufnahmebereich 44 der Verlegeeinrichtung 21 gebracht. Wie Fig. 10 zeigt, reicht der Kabelschutz 14 bis zu dem in den Meeresboden 8 eingepflügten Abschnitt des Kabels 7. Das Ende 41 des Kabelschutzes 14 ist kurz nach dem Herunterschwenken der Verlegeeinrichtung 21 im Bereich der Verlegeeinrichtung 21 angeordnet und wird von der Verlegeeinrichtung 21 in den Meeresboden 8 eingepflügt oder eingespült.

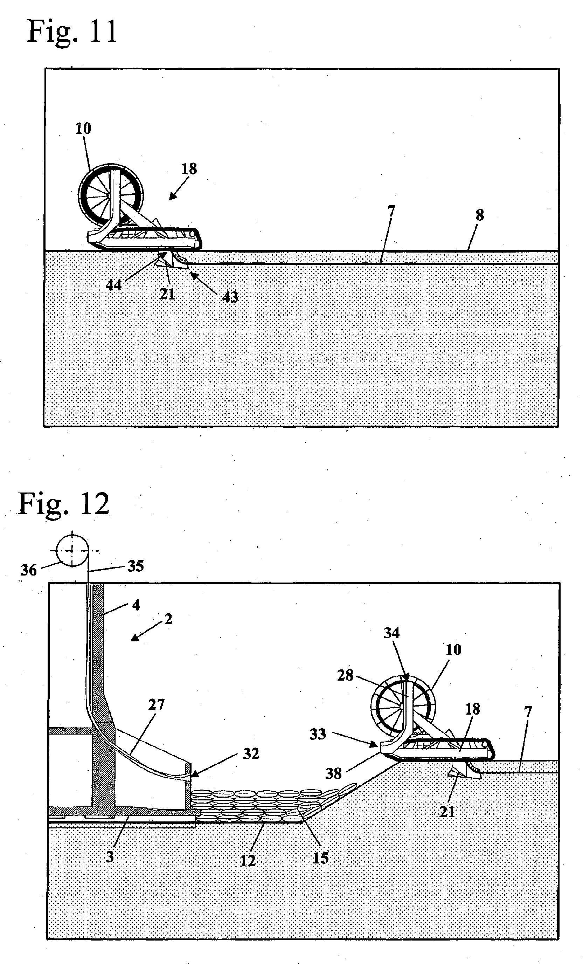

Nach dem Verlassen der Baugrube 11 bewegt sich das Unterwasserfahrzeug 18 von der ersten Windenergieanlage 1 zur zweiten Windenergieanlage 2, wie in Fig. 11 gezeigt ist. Dabei wird das Kabel 7 kontinuierlich in den Meeresboden 8 eingepflügt. Es kann auch vorgesehen sein, das Kabel 7 in den Meeresboden 8 einzuspülen.

Fig. 12 zeigt das Unterwasserfahrzeug 18 beim Erreichen der zweiten Baugrube 12. Das Unterwasserfahrzeug 18 besitzt eine Führung 28, die beispielsweise als geschlossener oder offener Kanal ausgeführt sein kann. Die Führung 28 ist etwa J-förmig ausgebildet und besitzt eine Austrittsöffnung 33, die in Fahrtrichtung 39 (Fig. 5) nach vorne gewandt ist und insbesondere benachbart zur Vorderseite 38 des Unterwasserfahrzeugs 18 angeordnet ist. Die zweite Windenergieanlage 2 besitzt einen Kabelkanal 27, der vorteilhaft als sogenannte J-tube ausgeführt ist. Der Kabelkanal 27 besitzt eine Eintrittsöffnung 32. Die Führung 28 besitzt eine Eintrittsöffnung 34, die nach oben ausgerichtet ist.

Wie Fig. 12 zeigt, verläuft durch den Kabelkanal 27 ein Seil 35, das an einer Winde 36 aufgewickelt werden kann. Die Winde 36 kann beispielweise an der Plattform 45 oder im Maschinengehäuse 5 angeordnet sein. Das freie Ende des Seils 35 ist vorteilhaft benachbart zur Eintrittsöffnung 32 angeordnet. Wie Fig. 12 auch zeigt, ist auch in der Baugrube 12 der zweiten Windenergieanlage 2 ein Kolkschutz 15 angeordnet.

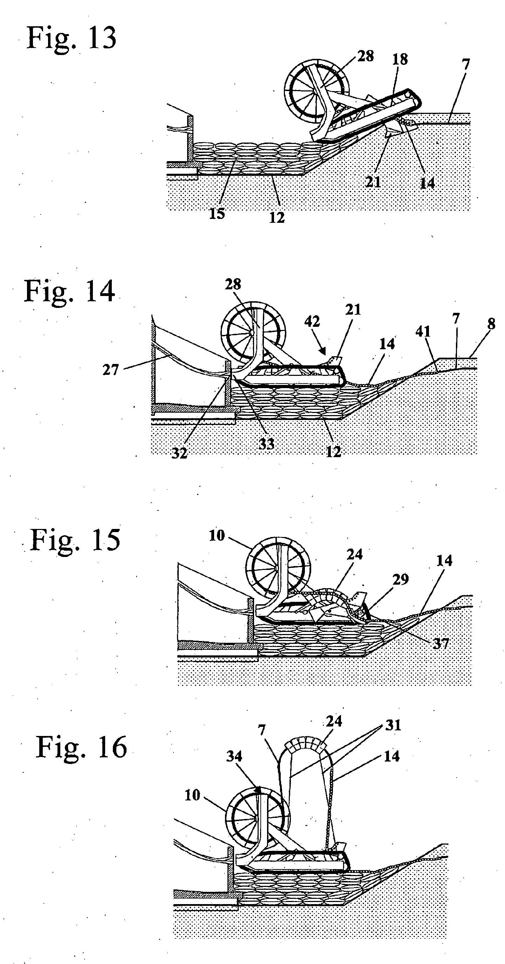

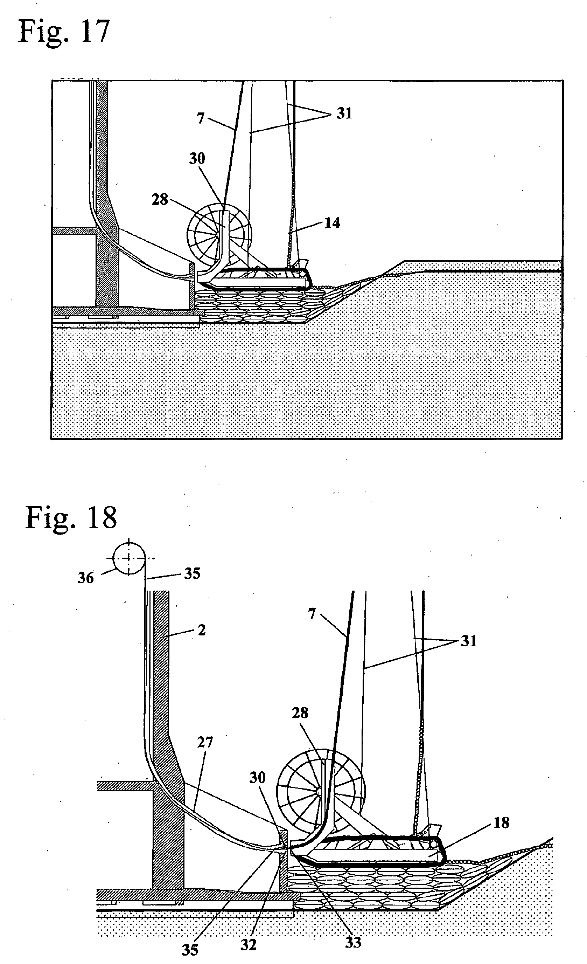

Fig. 13 zeigt das Unterwasserfahrzeug 18 beim Einfahren in die Baugrube 12. Dabei fährt das Unterwasserfahrzeug 18 auf den Kolkschutz 15 auf. Bei der Auslegung des Kolkschutzes 15 muss das Gewicht des Unterwasserfahrzeugs 18 berücksichtigt werden. Wie Fig. 13 zeigt, ist der Kabelpflug 21 noch in seiner Betriebsposition 43 angeordnet. Am Kabel 7 ist ein weiterer Kabelschutz 14 angeordnet. Bei Erreichen der Baugrube 12 wird der Kabelpflug 21 in seine Außerbetriebsposition 42 verschwenkt, wie Fig. 14 zeigt. Wie Fig. 14 auch zeigt, ist das Ende 41 des Kabelschutzes 14 in den Meeresboden 8 eingepflügt und außerhalb der Baugrube 12 in unmittelbarer Nähe zur Baugrube 12 angeordnet. Das Unterwasserfahrzeug 18 fährt in der Baugrube 12 bis zu einer Position, in der die Austrittsöffnung 33 aus der Führung 28 unmittelbar benachbart zur Eintrittsöffnung 32 in den Kabelkanal 27 angeordnet ist. Das Kabel 7 mit dem Kabelschutz 14 wird anschließend an einem Auftriebskörper 24 angeordnet, der in Fig. 15 gezeigt ist. Benachbart zur Rückseite 37 des Unterwasserfahrzeugs 18 ist der Kabelschutz 14 an einem Niederhalter 29 geführt, wie die Schnittdarstellung in Fig. 15 zeigt. Der Auftriebskörper 24 ist an Seilen 31 befestigt, die in Fig. 16 gezeigt sind. Der Auftriebskörper 24 rollt das Kabel 7 vollständig von der Kabeltrommel 10 ab, bis das in Fig. 17 gezeigte freie Kabelende 30 im Bereich der Eintrittsöffnung 34 (Fig. 16) in die Führung 28 angeordnet ist. Der Kabelschutz 14 ist dabei vom Niederhalter 29 gehalten, so dass das im Meeresboden eingepflügte Kabel nicht aufsteigen und aus dem Meeresboden 8 nach oben ausreißen kann.

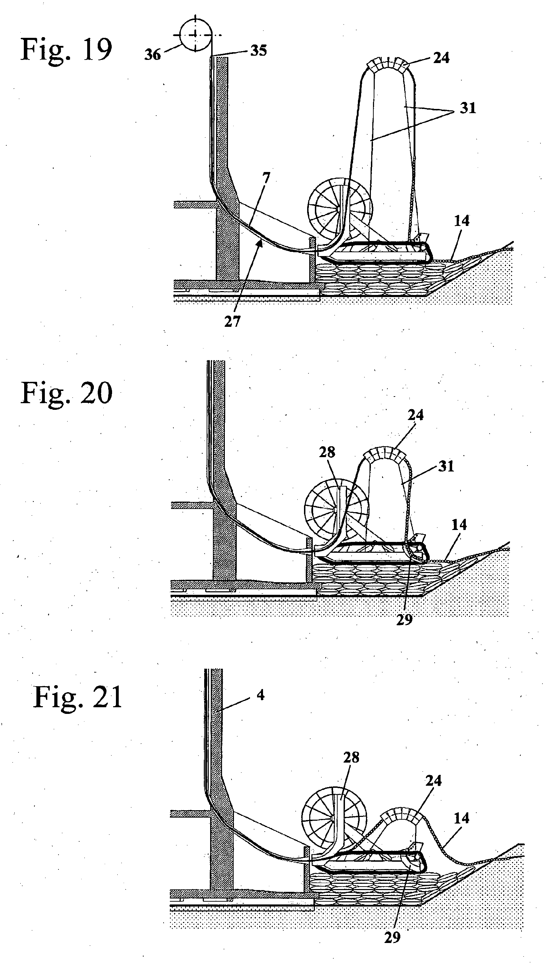

Nach vollständigem Abrollen des Kabels 7 wird das Kabelende 30 an der Führung 28 eingefädelt, und anschließend wird der Auftriebskörper 24 über die Seile 31 wieder zum Unterwasserfahrzeug 18 zurückgeholt. Dabei wird das Kabel 7 durch die Führung 28 geführt. Fig. 18 zeigt das Kabelende 30 am Übergang von der Austrittsöffnung 33 aus der Führung 28 zur Eintrittsöffnung 34 in den Kabelkanal 27. Benachbart zur Eintrittsöffnung 32 ist auch das Seil 35 angeordnet. Das Kabel 7 wird am Seil 35 festgelegt. Anschließend wird das Kabel 7 mittels dem Seil 35, das kontinuierlich auf die Winde 36 aufgewickelt wird, in den Kabelkanal 27 eingezogen, wie die Figuren 19 bis 21 zeigen. Gleichzeitig wird der Auftriebskörper 24 über die Seile 31 vorteilhaft ebenfalls über eine oder mehrere Winden zurück zum Unterwasserfahrzeug 18 geholt.

Der Auftriebskörper 24 verhindert, dass das Kabel 7 durch Knicken beschädigt wird. Das Kabel 7 ist dabei vorteilhaft über innerhalb des Auftriebskörpers 24 angebrachte Rollen geführt. Anstatt über ein Seil 35 kann das Kabel 7 auch über einen am Kabelkanal 27 angeordneten Fördermechanismus in der Windenergieanlage 2 nach oben gefördert werden.

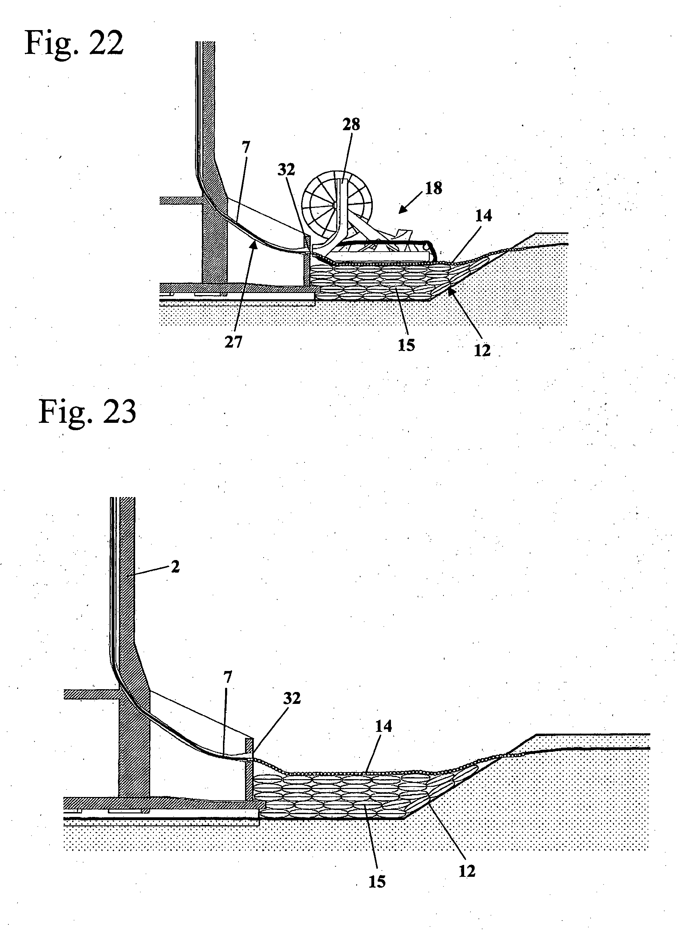

Wie Fig. 22 zeigt, ist der Kabelschutz 14 so bemessen, dass er sich vom Rand der Baugrube 12 bis in den Bereich der Eintrittsöffnung 32 des Kabelkanals 27 erstreckt. Dadurch können Beschädigungen des Kabels 7 in dem nicht in den Meeresboden 8 eingepflügten Abschnitt vermieden werden. Nach dem vollständigen Verlegen des Kabels 7 wird das Unterwasserfahrzeug 18 wieder aufgenommen, beispielsweise von einem Schiff. Das Kabel 7 wird innerhalb der zweiten Windenergieanlage 2 angeschlossen.

Das Kabel 7 ist an der Kabeltrommel 10 bereits so vorkonfektioniert, dass die Kabellänge auf die zur Verbindung der Windenergieanlagen 1 und 2 benötigte Kabellänge abgestimmt ist. Jeweils in dem Bereich, der in den Baugruben 11 und 12, also angrenzend zu den Fundamenten 3 der Windenergieanlagen 1, 2 bis zum Rand der Baugruben 11 und 12 zu verlegen ist, besitzt das Kabel 7 in an der Kabeltrommel 10 aufgerolltem Zustand bereits Abschnitte eines Kabelschutzes 14. Dadurch kann das Kabel 7 zwischen den Windenergieanlagen 1 und 2 schnell und einfach verlegt werden.

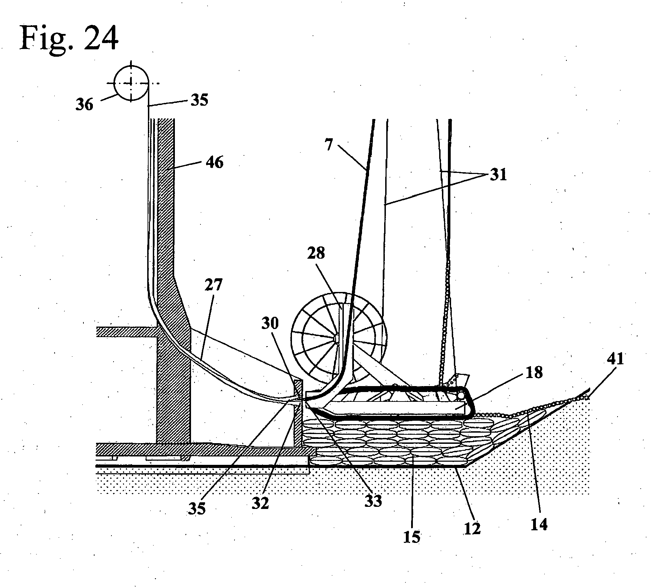

Anstatt mit einer zweiten Windenergieanlage 2 kann auch vorgesehen sein, die erste Windenergieanlage 1 mit einem anderen Zielort, beispielsweise dem in Fig. 24 gezeigten Leitungskabelsammelpunkt 46, zu verbinden. Der Aufbau des Leitungskabelsammelpunkts 46 entspricht dabei in den für die Kabelverlegung relevanten Komponenten dem der Windenergieanlage 1. Gleiche Bezugszeichen bezeichnen gleiche Elemente wie in den vorangegangenen Figuren. Fig. 24 zeigt den Leitungskabelsammelpunkt 46 beim Einführen des Kabelendes 30 in die Eintrittsöffnung 34 in den Kabelkanal 27 des Leitungskabelsammelpunkts 46. Das Verfahren zur Verbindung einer Windenergieanlage 1 mit einem Leitungskabelsammelpunkt 46 läuft entsprechend ab wie die Kabelverlegung zu einer zweiten Windenergieanlage 2.

## Patentansprüche

1. Verfahren zur Verlegung eines Kabels im Offshore-Bereich von einer Windenergieanlage zu einem Zielort, wobei das Kabel (7) an der Windenergieanlage (1) in einer Aufbewahrvorrichtung angeordnet ist, mit den folgenden Schritten:
- Aufnehmen der Aufbewahrvorrichtung mit dem Kabel (7) an der Windenergieanlage (1) mit einem Unterwasserfahrzeug (18),
- Transport der Aufbewahrvorrichtung mit dem Unterwasserfahrzeug (18) zum Zielort unter kontinuierlichem Verlegen des Kabels (7),
- Einbringen des Kabels (7) in einen hierfür vorgesehenen Kabelkanal (27) am Zielort.

2. Verfahren nach Anspruch 1,
**dadurch gekennzeichnet, dass** vor dem Aufnehmen der Aufbewahrvorrichtung in der Windenergieanlage (1) ein Kolkschutz (15) an der Windenergieanlage (8) eingebracht wird.

3. Verfahren nach Anspruch 2,
**dadurch gekennzeichnet, dass** das Unterwasserfahrzeug (18) nach dem Einbringen des Kolkschutzes (15) rückwärts an die Aufbewahrvorrichtung herangefahren und anschließend die Aufbewahrvorrichtung aufgenommen wird.

4. Verfahren nach einem der Ansprüche 1 bis 3,
**dadurch gekennzeichnet, dass** die Aufbewahrvorrichtung eine Kabeltrommel (10) ist.

5. Verfahren nach Anspruch 4,
**dadurch gekennzeichnet, dass** die Achse (22) der Kabeltrommel (10) mit einem Schwenkarm (20) des Unterwasserfahrzeugs (18) aufgenommen wird, wobei der Schwenkarm (20) bei der Aufnahme der Kabeltrommel (10) in einem einer Rückseite (37) des Unterwasserfahrzeugs (18) zugewandten Bereich angeordnet ist, und wobei der Schwenkarm (20) zum Aufnehmen der Kabeltrommel von der Windenergieanlage (1) wegschwenkt.

6. Verfahren nach Anspruch 5,
**dadurch gekennzeichnet, dass** der Schwenkarm (20) um eine Schwenkachse (23) schwenkbar gelagert ist, die quer zur Fahrrichtung (39) des Unterwasserfahrzeugs (18) bei Geradeausfahrt steht, wobei der Schwenkarm (20) eine Aufnahme (40) für die Achse (22) der Kabeltrommel (10) besitzt, und wobei die Aufnahme (40) beim Aufnehmen der Kabeltrommel (10) in Fahrtrichtung (39) hinter der Schwenkachse (23) und bei der Fahrt von der Windenergieanlage (1) zum Zielort in Fahrtrichtung (39) vor der Schwenkachse (23) angeordnet ist.

7. Verfahren nach Anspruch 5 oder 6,
**dadurch gekennzeichnet, dass** die Kabeltrommel (10) an dem Schwenkarm (20) frei drehbar ist, und dass das Kabel (7) aufgrund seines Eigengewichts von der Kabeltrommel (10) abgerollt wird.

8. Verfahren nach einem der Ansprüche 2 bis 7,
**dadurch gekennzeichnet, dass** das Kabel (7) im Bereich des Kolkschutzes (15) mit einem an dem Kabel (7) vormontierten Kabelschutz (14) auf dem Kolkschutz (15) verlegt wird.

9. Verfahren nach Anspruch 8,
**dadurch gekennzeichnet, dass** das der Windenergieanlage (1) abgewandte Ende (41) des Kabelschutzes (14) und das Kabel (7) im Bereich zwischen dem Kabelschutz (14) an der Windenergieanlage (1) und einem Kabelschutz (14) am Zielort in den Meeresboden (8) eingespült oder eingepflügt wird.

10. Verfahren nach einem der Ansprüche 2 bis 9,
**dadurch gekennzeichnet, dass** das Unterwasserfahrzeug (18) eine Verlegeeinrichtung (21) besitzt, wobei die Verlegeeinrichtung (21) in ihre Betriebsposition (43) und das Kabel (7) in den Aufnahmebereich (44) der Verlegeeinrichtung (21) bewegt werden, wenn das Unterwasserfahrzeug (18) den Bereich des Kolkschutzes (15) der Windenergieanlage (1) verlassen hat, und dass das Kabel (7) aus dem Aufnahmebereich (44) der Verlegeeinrichtung (21) und die Verlegeeinrichtung (21) in ihre Außerbetriebsposition (42) bewegt werden, bevor das Unterwasserfahrzeug (18) den Bereich eines Kolkschutzes (15) am Zielort erreicht.

11. Verfahren nach einem der Ansprüche 1 bis 10,
**dadurch gekennzeichnet, dass** das Kabel (7) am Zielort vollständig von der Aufbewahrvorrichtung abgenommen wird, wobei das Entnehmen von der Aufbewahrvorrichtung insbesondere mittels eines Auftriebkörpers (24) erfolgt.

12. Verfahren nach Anspruch 11,
**dadurch gekennzeichnet, dass** das Kabelende (30) in einen Kabelkanal (27) am Zielort eingeführt wird, wobei das Kabel (7) insbesondere unter Zurückholen des Auftriebskörpers (24) in den Kabelkanal (27) eingebracht wird.

13. Verfahren nach Anspruch 12,
**dadurch gekennzeichnet, dass** in dem Kabelkanal (27) ein Seil (35) angeordnet ist, an dem das Kabelende (30) festgelegt ist, wobei das Kabel (7) mittels des Seils (35) in den Kabelkanal (27) eingezogen wird.

14. Verfahren nach Anspruch 12 oder 13,
**dadurch gekennzeichnet, dass** das Unterwasserfahrzeug (18) eine Führung (28) für das Kabel (7) besitzt, und dass das Unterwasserfahrzeug (18) so an den Zielort gefahren wird, dass eine Austrittsöffnung (33) aus der Führung (28) des Unterwasserfahrzeugs (18) an einer Eintrittsöffnung (32) des Kabelkanals (27) am Zielort zu liegen kommt.

15. Windenergieanlage zur Anordnung im Offshore-Bereich,
**dadurch gekennzeichnet, dass** die Windenergieanlage (1) eine abnehmbare Aufbewahrvorrichtung für ein Kabel (7) zur Verbindung mit einem Zielort besitzt, wobei in der Aufbewahrvorrichtung ein an die Windenergieanlage (1) angeschlossenes Kabel (7) zur Verbindung mit dem Zielort angeordnet ist.

16. Windenergieanlage nach Anspruch 15,
**dadurch gekennzeichnet, dass** die Länge des Kabels (7) auf den Abstand (a) und die Höhe (h) der Anschlussstelle an der Windenergieanlage (1) und am Zielort abgestimmt ist.

17. Windenergieanlage nach Anspruch 15 oder 16,
**dadurch gekennzeichnet, dass** das Kabel (7) in den Abschnitten, die im Bereich eines Kolkschutzes (15) der Windenergieanlage (1) und des Zielorts zu verlegen sind, einen Kabelschutz (14) aufweist.

18. Windenergieanlage nach einem der Ansprüche 15 bis 17,
**dadurch gekennzeichnet, dass** die Aufbewahrvorrichtung eine Kabeltrommel (10) ist, und dass die Windenergieanlage (1) eine Halterung (13) für die Kabeltrommel (10) besitzt.

## Claims

1. Method for laying a cable in the offshore area from a wind power plant to a destination, wherein the cable (7) is arranged at the wind power plant (1) in a storage device, the method having the following steps:
- receiving a storage device with the cable (7) at the wind power plant (1) with a submarine vehicle (18),
- transporting the storage device with the submarine vehicle (18) to the destination with continuous laying of the cable (7),
- incorporating the cable (7) into a cable duct (27), provided for this purpose, at the destination.

2. Method according to claim 1,
**characterised in that** a scour protection (15) is incorporated at the wind power plant (8) before receiving the storage device at the wind power plant (1).

3. Method according to claim 2,
**characterised in that** the submarine vehicle (18) is moved backwards, after incorporation of the scour protection (15), towards the storage device and the storage device is subsequently received.

4. Method according to one of claims 1 to 3,
**characterised in that** the storage device is a cable drum (10).

5. Method according to claim 4,
**characterised in that** the shaft (22) of the cable drum (10) is received with a pivot arm (20) of the submarine vehicle (18), wherein the pivot arm (20) is arranged, during receiving of the cable drum (10), in an area facing a rear side (37) of the submarine vehicle (18), and wherein the pivot arm (20) pivots away from the wind power plant (1) to receive the cable drum.

6. Method according to claim 5,
**characterised in that** the pivot arm (20) is mounted so that it can be pivoted about a pivot axis (23) which is transverse with respect to the travel direction (39) of the submarine vehicle (18) when travelling in a straight line, wherein the pivot arm (20) has a receiving area (40) for the shaft (22) of the cable drum (10), and wherein the receiving area (40) is arranged, during receiving of the cable drum (10), in the travel direction (39) behind the pivot axis (23) and, during travel from the wind power plant (1) to the destination, in the travel direction (39) before the pivot axis (23).

7. Method according to claim 5 or 6,
**characterised in that** the cable drum (10) is freely rotatable on the pivot arm (20) and the cable (7) is rolled from the cable drum (10) due to its own weight.

8. Method according to one of claims 2 to 7,
**characterised in that** the cable (7) is laid in the area of the scour protection (15) with a cable protection (14), pre-assembled on the cable (7), on the scour protection (15).

9. Method according to claim 8,
**characterised in that** the end (41) of the cable protection (14) facing away from the wind power plant (1) and the cable (7) in the area between the cable protection (14) at the wind power plant (1) and a cable protection (14) at the destination are jetted or furrowed into the seabed (8).

10. Method according to one of claims 2 to 9,
**characterised in that** the submarine vehicle (18) has a laying means (21), wherein the laying means (21) is moved into its operational position (43) and the cable (7) is moved into the receiving area (44) of the laying means (21) if the submarine vehicle (18) has left the area of the scour protection (15) of the wind power plant (1), and the cable (7) is moved out of the receiving area (44) of the laying means (21) and the laying means (21) is moved into its non-operational position (42) before the submarine vehicle (18) reaches the area of a scour protection (15) at the destination.

11. Method according to one of claims 1 to 10,
**characterised in that** the cable (7) is completely removed from the storage device at the destination, wherein the removal from the storage device takes place in particular by means of a buoyancy body (24).

12. Method according to claim 11,
**characterised in that** the cable end (30) is introduced into a cable duct (27) at the destination, wherein the cable (7) is incorporated into the cable duct (27) in particular through the retrieval of the buoyancy body (24).

13. Method according to claim 12,
**characterised in that** a cord (35) is arranged in the cable duct (27), to which the cable end (30) is fixed, wherein the cable (7) is drawn by means of the cord (35) into the cable duct (27).

14. Method according to claim 12 or 13,
**characterised in that** the submarine vehicle (18) has a guide (28) for the cable (7), and the submarine vehicle (18) is moved to the destination in such a way that an outlet opening (33) from the guide (28) of the submarine vehicle (18) comes to lie at an inlet opening (32) of the cable duct (27) at the destination.

15. Wind power plant for arrangement in the offshore area,
**characterised in that** the wind power plant (1) has a removable storage device for a cable (7) for connection to a destination, wherein a cable (7) attached to the wind power plant (1) for connection to the destination is arranged in the storage device.

16. Wind power plant according to claim 15,
**characterised in that** the length of the cable (7) is tailored to the distance (a) and the height (h) of the connecting point at the wind power plant (1) and at the destination.

17. Wind power plant according to claim 15 or 16,
**characterised in that** the cable (7) has a cable protection (14) in the sections which are to be laid in the area of a scour protection (15) of the wind power plant (1) and the destination.

18. Wind power plant according to one of claims 15 to 17,
**characterised in that** the storage device is a cable drum (10), and the wind power plant (1) has a support (13) for the cable drum (10).

## Revendications

1. Procédé de pose d'un câble dans la zone en mer, d'une éolienne jusqu'à un lieu de destination, étant précisé que le câble est disposé sur l'éolienne (1) dans un dispositif de stockage, avec les étapes suivantes :
- réception, par un véhicule sous-marin (18), du dispositif de stockage avec le câble (7) au niveau de l'éolienne (1),
- transport du dispositif de stockage avec le véhicule sous-marin (18) jusqu'au lieu de destination, moyennant une pose continue du câble (7),
- introduction du câble (7) dans un conduit pour câble (27) prévu à cet effet, sur le lieu de destination.

2. Procédé selon la revendication 1,
**caractérisé en ce qu'**avant la réception du dispositif de stockage dans l'éolienne (1), une protection anti-affouillement (15) est mise en place au niveau de l'éolienne (8).

3. Procédé selon la revendication 2,
**caractérisé en ce que** le véhicule sous-marin (18), après la mise en place de la protection anti-affouillement (15), est approché à reculons du dispositif de stockage, et le dispositif de stockage est ensuite reçu.

4. Procédé selon l'une des revendications 1 à 3,
**caractérisé en ce que** le dispositif de stockage est constitué par un tambour pour câble (10).

5. Procédé selon la revendication 4,
**caractérisé en ce que** l'axe (22) du tambour pour câble (10) est reçu par un bras pivotant (20) du véhicule sous-marin (18), étant précisé que le bras pivotant (20), lors de la réception du tambour pour câble (10), est disposé dans une zone tournée vers un côté arrière (37) du véhicule sous-marin (18), et que ledit bras pivotant (20), pour recevoir le tambour pour câble, pivote en s'éloignant de l'éolienne (1).

6. Procédé selon la revendication 5,
**caractérisé en ce que** le bras pivotant (20) est monté pivotant sur un pivot (23) qui est transversal par rapport au sens de déplacement (39) du véhicule sous-marin (18), lorsque celui-ci va tout droit, étant précisé que le bras pivotant (20) comporte un logement (40) pour l'axe (22) du tambour pour câble (10), et que le logement (40), lors de la réception du tambour pour câble (10), se trouve derrière le pivot (23), dans le sens de déplacement (39), et lors du trajet qui va de l'éolienne (1) jusqu'au lieu de destination, se trouve devant le pivot (23), dans le sens de déplacement (39).

7. Procédé selon la revendication 5 ou 6,
**caractérisé en ce que** le tambour pour câble (10) est librement mobile sur le bras pivotant (20) et **en ce que** le câble (7) est déroulé par son propre poids du tambour pour câble (10).

8. Procédé selon l'une des revendications 2 à 7,
**caractérisé en ce que** le câble (7), dans la zone de la protection anti-affouillement (15), est posé sur ladite protection anti-affouillement (15) avec une protection de câble (14) prémontée sur le câble (7).

9. Procédé selon la revendication 8,
**caractérisé en ce que** l'extrémité (41) de la protection de câble (14) opposée à l'éolienne (1) et le câble (7) sont immergés ou enfouis dans le fond marin (8) dans la zone située entre la protection de câble (14) au niveau de l'éolienne (1) et une protection de câble (14) sur le lieu de destination.

10. Procédé selon l'une des revendications 2 à 9,
**caractérisé en ce que** le véhicule sous-marin (18) comporte un dispositif de pose (21), étant précisé que le dispositif de pose (21) est amené dans sa position de fonctionnement (43) et le câble (7) dans la zone de réception (44) du dispositif de pose (21) quand le véhicule sous-marin (18) a quitté la zone de la protection anti-affouillement (15) de l'éolienne (1), et **en ce que** le câble (7) est sorti de la zone de réception (44) du dispositif de pose (21) et le dispositif de pose (21) amené dans sa position de non fonctionnement (42) avant que le véhicule sous-marin (18) n'atteigne la zone d'une protection anti-affouillement (15) sur le lieu de destination.

11. Procédé selon l'une des revendications 1 à 10,
**caractérisé en ce que** le câble (7), sur le lieu de destination, est complètement enlevé du dispositif de stockage, étant précisé que cela se fait en particulier à l'aide d'un flotteur (24).

12. Procédé selon la revendication 11,
**caractérisé en ce que** l'extrémité de câble (30) est introduite dans un conduit pour câble (27), sur le lieu de destination, étant précisé que le câble (7) est inséré dans ledit conduit pour câble (27) en particulier moyennant le retour du flotteur (24) dans sa position initiale.

13. Procédé selon la revendication 12,
**caractérisé en ce qu'**il est prévu dans le conduit pour câble (27) un cordage (35) auquel l'extrémité de câble (30) est fixée, étant précisé que le câble (7) est tiré dans le conduit (27) à l'aide du cordage (35).

14. Procédé selon la revendication 12 ou 13,
**caractérisé en ce que** le véhicule sous-marin (18) comporte un guide (28) pour le câble (7), et **en ce que** le véhicule sous-marin (18) est amené sur le lieu de destination de telle sorte qu'une ouverture de sortie (33) du guide (28) du véhicule sous-marin (18) vienne s'appliquer contre une ouverture d'entrée (32) du conduit pour câble (27) sur le lieu de destination.

15. Eolienne à disposer dans la zone en mer,
**caractérisée en ce que** l'éolienne (1) comporte un dispositif de stockage amovible pour un câble à relier à un lieu de destination, étant précisé qu'il est prévu dans le dispositif de stockage un câble (7) raccordé à l'éolienne (1), qui est destiné à être relié au lieu de destination.

16. Eolienne selon la revendication 15,
**caractérisée en ce que** la longueur du câble (7) est adaptée à l'écartement (a) et à la hauteur (h) des points de raccordement respectifs prévus sur l'éolienne (1) et sur le lieu de destination.

17. Eolienne selon la revendication 15 ou 16,
**caractérisée en ce que** le câble (7), dans les sections qui doivent être posées dans la zone d'une protection anti-affouillement (15) de l'éolienne (1) et du lieu de destination, comporte une protection de câble (14).

18. Eolienne selon l'une des revendications 15 à 17,
**caractérisé en ce que** le dispositif de stockage est constitué par un tambour pour câble (10) et **en ce que** l'éolienne (1) comporte une fixation (13) pour le tambour pour câble (10).
